# EUROPÄISCHE PATENTSCHRIFT

(11) **EP 1 423 313 B1**
(45) Veröffentlichungstag und Bekanntmachung des Hinweises auf die Patenterteilung: **02.08.2006**
(21) Anmeldenummer: 02752937.9
(22) Anmeldetag: 03.09.2002
(51) Int. Cl.: B65D 83/06, B65D 47/12

(54) **DOSIERVERSCHLUSS AUS GESPRITZTEM KUNSTSTOFF**
DOSING CLOSURE CONSISTING OF EXTRUDED PLASTIC
BOUCHON DOSEUR EN PLASTIQUE EXTRUDE

(30) Priorität: 06.09.2001 CH 165001
(43) Veröffentlichungstag der Anmeldung: 02.06.2004
(73) Patentinhaber: Medisize Schweiz AG, 8309 Nürensdorf (CH)
(72) Erfinder: BRENNER, Andreas, CH-8475 Ossingen (CH)
(74) Vertreter: Felber, Josef
(86) Internationale Anmeldenummer: PCT/CH2002/000482
(87) Internationale Veröffentlichungsnummer: WO 2003/020609

(56) Entgegenhaltungen:
- EP-A- 0 001 411
- WO-A-97/14632
- DE-A- 2 557 694

## Beschreibung

Diese Erfindung betrifft einen Dosierverschluss aus gespritztem Kunststoff zum dosierten Ausschütten von schüttfähigen Gütern. Bei diesen Gütern kann es sich zum Beispiel um Instantgetränkepulver, Kaffeepulver, Zucker, Milchpulver oder ähnliche schüttfähige Produkte aller Art handeln, die in bestimmte Portionen dosiert werden müssen.

Solche Dosierverschlüsse sind in verschiedenen Ausführungen bekannt. Sie werden üblicherweise auf eine Flasche aufgeschraubt und verschliessen diese dicht. Wenn eine Portion des Inhaltes ausgeschüttet werden soll, so wird die Flasche gestürzt und der Dosierverschluss wird betätigt, sodass eine bestimmte Portion des Inhaltes ausgeschüttet wird. Die meisten derartigen Dosierverschlüsse bestehen aus mehreren Teilen, die gegeneinander um eine Achse verdrehbar sind. Zum Beispiel kann ein solcher Dosierverschluss wie ein Kugelhahn gebaut sein, wobei die verdrehbare Kugel keine durchgehende Bohrung aufweist, sondern bloss eine Sackbohrung. Die Drehachse der Kugel verläuft senkrecht zur Ausschüttrichtung. Im geschlossenen Zustand des Dosierverschlusses ist die Sackbohrung gegen das Flascheninnere hin gerichtet. Wird die Flasche gestürzt, so wird die Sackbohrung gefüllt. Hernach wird die Kugel um 180° gedreht und der Inhalt der Sackbohrung wird durch die Mündung im Kugelgehäuse ausgeschüttet, während die gegenüberliegende Kugelwand die Flaschenmündung verschliesst. Eine ähnliche Lösung besteht aus einem flachen, dosenförmigen Verschlussgehäuse und einem darin dreh- oder schwenkbar gelagerten ebenfalls dosenförmigen Dosierelement, welches in seinem Randbereich jedoch eine Ausnehmung aufweist, die aber auch kreissegmentförmig bis nahe an die Drehachse dieses Dosierelementes reichen kann. Das Verschlussgehäuse hat in seiner der Flasche zugewandten, inneren Gehäuseebene an einer Stelle eine Einfüllöffnung und in seiner dazu parallelen, äusseren Gehäuseebene eine Ausschüttöffnung, die von der Einfüllöffnung um zum Beispiel 180° versetzt ist. Mittels Betätigungsorganen, welche die Gehäusewand andernorts durchsetzen, kann das Dosierelement im Innern des Verschlussgehäuses verdreht oder zumindest um einen bestimmten Winkel verschwenkt werden. Zum Ausschütten einer Portion wird die Flasche gestürzt und das Dosierelement verdreht oder soweit verschwenkt, bis sich seine Ausnehmung durch die Einfüllöffnung in der dann obenliegenden Gehäuseebene gefüllt hat. Hernach wird das Dosierelement weiter verdreht, bis die Ausnehmung von der Einfüllöffnung ganz weggeschwenkt ist und kein weiteres Material mehr in dieselbe gelangen kann. Dann wird das Dosierelement weitergedreht, bis dessen Ausnehmung über der Ausschüttöffnung in der dann unten liegenden, äusseren Gehäuseebene zu liegen kommt und der Inhalt der Ausnehmung durch die Öffnung nach unten rinnt. Nachteilig bei den bisherigen Dosierverschlüssen dieser Art ist ihr aufwändiger Aufbau, der aus einer Vielzahl von zum Teil kompliziert geformten Teilen besteht. Das Gehäuse muss ja das Dosierelement dichtend aufnehmen. Um das Dosierelement dichtend in ein Gehäuse hineinmontieren zu können, ist das Gehäuse aus mehreren Teilen zusammensetzbar hergestellt. Weiter muss das Dosierelement auch von aussen verschwenkbar sein, was das Anformen oder Anbauen weiterer Teile nötig macht. Insgesamt ist die Herstellung der bisher bekannt gewordenen Dosierverschlüsse aufwändig, erfordert Spritzwerkzeuge mit ein oder mehr Schiebern und die Montage der Verschlüsse ist arbeitsaufwändig. Aus der WO97/146632 ist ein Dosierverschluss aus gespritztem Kunststoff für Schüttgüter bekannt, welcher eine Kappe mit zugehörigen aufsteckbaren Kappendeckel aufweist, welcher mittels Schnappverschlüssen dichtend verschliessbar ist. Die Kappe enthält einen Zwischenboden und zwischen diesem Zwischenboden und dem Kappendeckel ist ein Dosierelement schwenkbar gelagert eingesetzt. Dieser Verschluss besteht aus wenigstens vier Teilen, mit dem Deckel für den Ausguss sind es fünf Teile.

Es ist die Aufgabe der vorliegenden Erfindung, einen Dosierverschluss für schüttfähige Güter anzugeben, welcher aus weniger Teilen besteht als herkömmliche solche Verschlüsse, und dessen Teile mittels schieberlosen Spritzwerkzeugen herstellbar sind.

Diese Aufgabe wird gelöst von einem Dosierverschluss aus gespritztem Kunststoff für schüttfähige Güter, bestehend aus einem Gehäuse mit darin verschwenkbar gelagertem Dosierelement, wobei das Gehäuse eine Kappe und einen daran einstückig über ein Filmscharnier angeformten Kappendeckel bildet, der mittels Schnappverschlüssen dichtend verschliessbar ist, und die Kappe einen Zwischenboden aufweist, wobei zwischen dem Kappendeckel und dem Zwischenboden ein einstückiges Dosierelement schwenkbar gelagert ist, *dadurch gekennzeichnet,* dass das Dosierelement aus mindestens einem kreissegmentförmigen Körper besteht, welcher durch radiale Trennwände drei aneinander anliegende Teilsegmente bildet, von denen das mittlere eine Kammer bildet, die oben und unten offen ist, während von den aussen anliegenden Teilsegmenten das eine oben offen und unten geschlossen ist und das andere oben geschlossen und unten offen ist, wobei die Kammer je nach Schwenkstellung mit einer Öffnung im Deckel oder einer Öffnung im Zwischenboden kommuniziert.

In den Zeichnungen werden Ausführungsbeispiele dieses Dosierverschlusses dargestellt und in der nachfolgenden Beschreibung werden diese Dosierverschlüsse im einzelnen beschrieben und ihre Funktion und Herstellung wird erläutert.
Es zeigt:
- Figur 1:: Eine erste Variante des Dosierverschlusses mit zwei Dosierkammern und zwei Ausschüttöffnungen in einer perspektivischen Ansicht des Verschlussgehäuses ohne Kappe, jedoch mit darin eingesetztem Dosierelement;
- Figur 2:: Das Dosierelement des Dosierverschlusses nach Figur 1 in einer gesonderten, perspektivischen Ansicht;
- Figur 3:: Den Dosierverschluss nach Figur 1 in geschlossenem Grundzustand von oben gesehen;
- Figur 4:: Den Dosierverschluss nach Figur 1 in einer Ansicht von unten im geschlossenen Grundzustand;
- Figur 5:: Den Dosierverschluss nach Figur 1 in einer Ansicht von oben mit dem Dosierelement in Mittelstellung;
- Figur 6:: Den Dosierverschluss nach Figur 1 in einer Ansicht von unten mit dem Dosierelement in Mittelstellung;
- Figur 7:: Den Dosierverschluss nach Figur 1 in einer Ansicht von oben mit dem Dosierelement in Endstellung zum Ausschütten der portionierten Dosis;
- Figur 8:: Den Dosierverschluss nach Figur 1 in einer Ansicht von unten mit dem Dosierelement in Endstellung;
- Figur 9:: Eine zweite Variante des Dosierverschlusses mit einem alternativen Dosierelement in einer Ansicht vor dem Zusammenbau;
- Figur 10-12:: Drei Ansichten des Dosierelementes des Verschlusses nach Figur 9 aus verschiedenen Blickwinkeln gesehen.

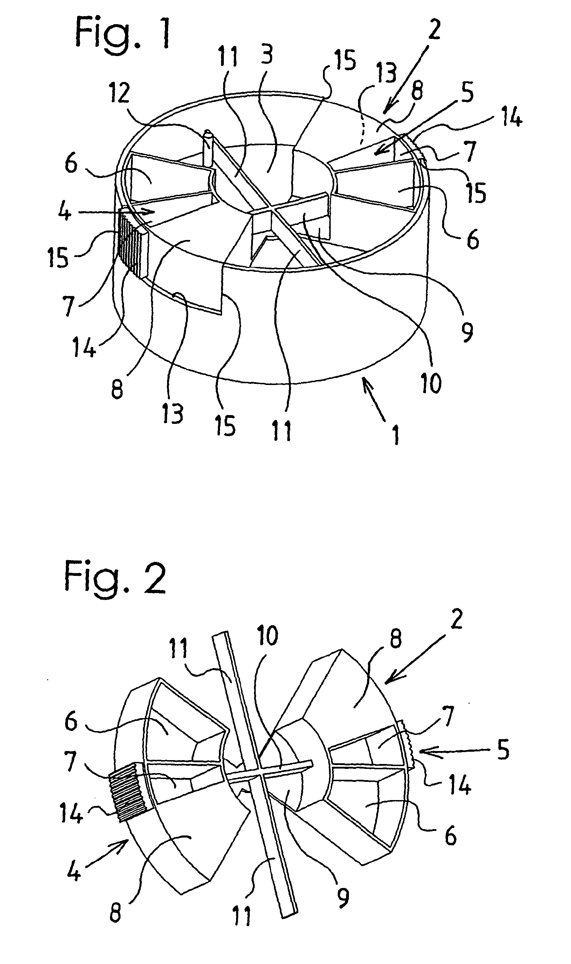

In Figur 1 ist eine erste Variante des Dosierverschlusses dargestellt, wobei der Verschlussdeckel weggelassen wurde, sodass man auf das eingelegte Dosierelement sieht. Dieser Verschluss weist in seinem Dosierelement gleich zwei Dosierkammern auf und in der zugehörigen Dosierverschlusskappe zwei Ausschüttöffnungen. Der Dosierverschluss besteht bloss aus drei je einstückigen Teilen, nämlich aus dem Verschlussgehäuse 1, das eine Kappe bildet, wobei deren Deckel in dieser Zeichnung fehlt, und aus dem Dosierelement 2. Beide Teile 1,2 wie auch der mittels Schnappverschlüssen auf das als Kappe wirkende Verschlussgehäuse 1 aufsteckbare Kappendeckel können durch ein höchst einfaches Spritzwerkzeug hergestellt werden, welches ohne jegliche Schieber auskommt und also nur zwei Spritzwerkzeugteile einschliesst, die linear zusammenfahren und im Schliesszustand den ganzen auszuspritzenden Hohlraum einschliessen. Das Verschlussgehäuse 1 formt im Prinzip eine Kappe, die jedoch einen Zwischenboden 3 aufweist, wobei wie schon erwähnt der Kappendeckel hier nicht dargestellt ist. Oberhalb des Zwischenbodens 3 wird durch dieses Verschlussgehäuse 1 ein hier kreisrunder Behälter gebildet, der zur Aufnahme des Dosierelementes 2 dient. Dieses Dosierelement 2 besteht im hier gezeigten Beispiel aus zwei voneinander diametral abstehenden Kreissegment-Körpern 4,5. Jeder Segmentkörper 4,5 ist durch radiale Trennwände in drei aneinander anliegende Teilsegmente 6,7,8 aufgeteilt. Das mittlere Teilsegment formt eine Kammer 7, die durchgehend ist, weil sie oben und unten offen ist. Das eine äussere Teilsegment bildet im gezeigten Beispiel ebenfalls eine Kammer 6, die aber unten geschlossen und oben offen ist und das gegenüberliegende Teilsegment eine äussere Kammer 8, die umgekehrt unten offen und oben geschlossen ist. Die äussersten radialen Wände könnten auch weggelassen werden, wonach diese äusseren Teilsegmente nicht mehr als Kammern bezeichnet werden könnten. Die beiden Segmentkörper 4,5 sind miteinander über ein Stück gemeinsame Bodenplatte 9 verbunden und ausserdem verläuft auf diesem Boden und an ihm angeformt ein Steg 10, welcher die beiden Segmentkörper 4,5 ebenfalls miteinander verbindet. Dadurch wird eine biegesteife Verbindung der beiden Segmentkörper 4,5 in allen Richtungen erzielt. Quer zum Steg 10 verläuft eine als Blattfeder wirkende flache Rippe 11. Aus dem Zwischenboden 3 ist neben dem Ende der Rippe 11 ein Anschlagzapfen 12 ausgeformt, sodass also die Rippe 11 bei Verdrehen des Dosierelementes 2 hier im Gegenuhrzeigersinn an diesem Zapfen 12 anschlägt und sich die Rippe 11 federnd krümmt. Auf der gegenüberliegenden Seite ist in genau gleicher Weise ein solcher Zapfen 12 aus dem Zwischenboden 3 ausgeformt, neben dem dortigen Rippenende im Gegenuhrzeigersinn. Das Dosierelement 3 ist so hoch gestaltet, dass es mit dem oberen Rand des Verschlussgehäuses 1 bündig ist. In der Umfangswand des Verschlussgehäuses 1 sind im Bereich der Segmentkörper 4,5 des eingelegten Dosierelementes 2 Ausnehmungen 13 vorhanden, über deren Bereich die durchgehenden Kammern 7 schwenkbar sind. Die Aussenwand der Segmentkörper 4,5 bildet eine gekrümmte Fläche mit dem gleichen Radius wie die Innenseite des Verschlussgehäuses 1, wodurch das Dosierelement 2 im Innern des Verschlussgehäuses 1 satt anliegt und für das aufzunehmende Schüttgut dichtend schwenkbar ist. An der Aussenwand der Segmentkörper 4,5 angeformt ist je eine Erhöhung 14 als Grifffläche. Die Aussenseite der Erhöhung 14 ist zu diesem Zweck mit einer Rändelung in Form von vertikal verlaufenden Rillen versehen. Die Begrenzungsflächen dieser Erhöhungen 14 bilden Anschläge, das heisst, das Dosierelement 2 ist im Verschlussgehäuse 1 nur soweit verschwenkbar, bis diese Erhöhungen 14 an den Rändern 15 der Ausnehmungen 13 anschlagen. Zum Verschwenken des Dosierelementes 2 wird der Dosierverschluss mit Daumen und Zeige- oder Mittelfinger an den beiden Erhöhungen 14 ergriffen und das Dosierelement 2 wird im Innern des Verschlussgehäuses 1 verschwenkt, hier im Gegenuhrzeigersinn. Bei dieser Verschwenkung wird die Rippe 11 elastisch gekrümmt, weil ihre Enden ja wegen der Anschlagzapfen 12 nicht mit dem Dosierelement 2 mitschwenken können. Durch die elastische Krümmung der Rippe 11 entwickelt diese ein rückstellendes Drehmoment, kraft dessen das Dosierelement 2 nach seinem Loslassen oder nach dem genügenden Reduzieren der wirkenden Schwenkkraft wieder zurück in seine hier gezeigte Ausgangslage geschwenkt wird.

Die Figur 2 zeigt das Dosierelement 2 des Dosierverschlusses nach Figur 1 in einer gesonderten, perspektivischen Ansicht. Man erkennt hier seinen Aufbau mit den zwei Segmentkörpem 4,5 sowie die darin angeordneten, von den Teilsegmenten 6,7,8 gebildeten Kammern 6,7,8, von denen die Kammern 7 durchgehend sind, das heisst oben und unten offen, während die im Uhrzeigersinn angrenzenden Kammern 6 unten geschlossen sind, das heisst dort einen Boden aufweisen, und oben offen sind, während die im Gegenuhrzeigersinn angrenzenden Kammern 8 unten offen sind und oben durch eine Abschlussfläche verschlossen sind. Die mittleren Kammern 7 erstrecken sich über einen halb so grossen Segmentwinkel wie die beiden äusseren Kammern 6,8, oder um einen noch kleineren Segmentwinkel. Die beiden Segmentkörper 4,5 sind über den Boden 9 miteinander verbunden und auch über den im rechten Winkel zum Boden 9 verlaufenden Steg 10. Im rechten Winkel zu diesem Steg ist die federnde Rippe 11 angeformt.

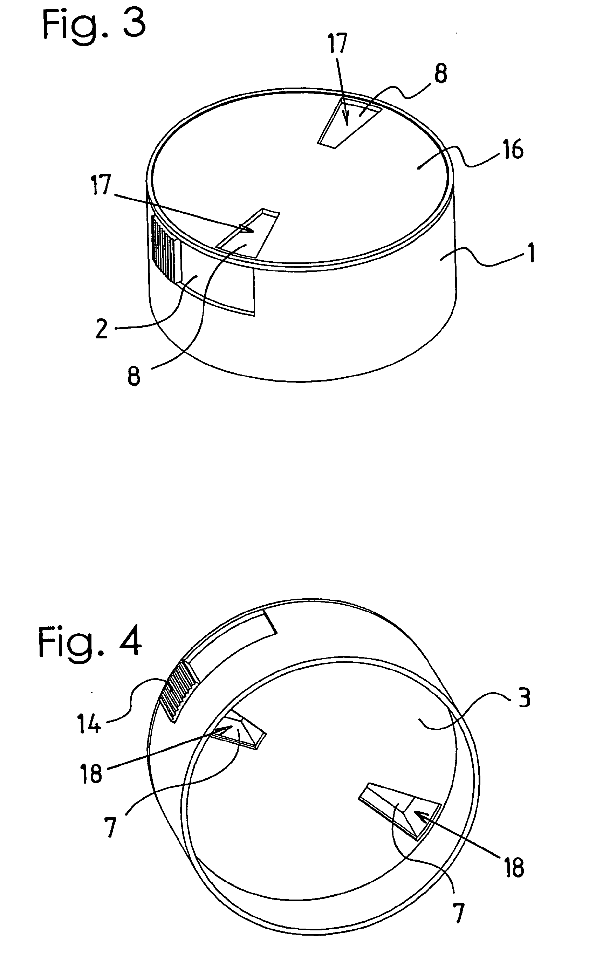

Die Figur 3 zeigt den Dosierverschluss nach Figur 1 in geschlossenem Grundzustand von oben gesehen. Im Unterschied zur Darstellung in Figur 1 ist das Dosierverschluss-Gehäuse hier von einem Deckel 16 verschlossen. Dieser Deckel 16 ist mit Schnappverschluss-Elementen ausgerüstet, die sich längs des Randes seiner Unterseite angeformt sind. Längs des oberen Randes der Gehäusewand, wo sich keine Ausnehmungen befinden, sind auf der Innenseite die Gegenstücke dieser Schnappverschluss-Elemente angeformt, welche mit Elementen am Rand der unteren Deckelseite zusammenwirken. Der Deckel 16 auf den Rand der Gehäusewand gepresst werden, wo er dann einklickt bzw. einschnappt und das Gehäuse 1 für das aufzunehmende und dann zu spendende Schüttgut dichtend verschliesst. In der gezeigten Position ist der Dosierverschluss geschlossen. Das Dosierelement 2 befindet sich im Grundzustand, in welchem die federnde Rippe praktisch entspannt ist. Die oben verschlossenen Kammern 8 der beiden Segmentkörper des Dosierelementes 2 liegen unter den segmentförmigen Ausschüttöffnungen 17 und verschliessen dieselben dicht. Als Variante kann das Verschlussgehäuse, welches eine Kappe mit Deckel bildet, auch einstückig hergestellt werden, indem der Kappendeckel über ein übliches Filmschamier einstückig mit der Verschlussgehäusewand verbunden ist. Das Verschlussgehäuse kann dann mit einem einzigen Spritzwerkzeug in offenem Zustand gespritzt werden.

In Figur 4 ist dieser Dosierverschluss in einer Ansicht von unten im eben beschriebenen geschlossenen Grundzustand gezeigt. Im Zwischenboden 3 sind segmentförmige Einschüttöffnungen 18 ausgenommen. Im Grundzustand liegen die beidseits offenen, den Griffen 14 gegenüberliegenden Kammern 7 über diesen Einschüttöffnungen 18. Ist der Dosierverschluss auf eine Flasche aufgesetzt und befindet er sich in diesem hier gezeigten Grundzustand, und wird dann die Flasche gestürzt, so rinnt das im der Flasche enthaltene Schüttgut durch die Einschüttöffnungen 18 in die Kammern 7. Wird sodann das Dosierelement 2 im Dosierverschluss verschwenkt, so gelangt es zunächst in eine Mittelstellung.

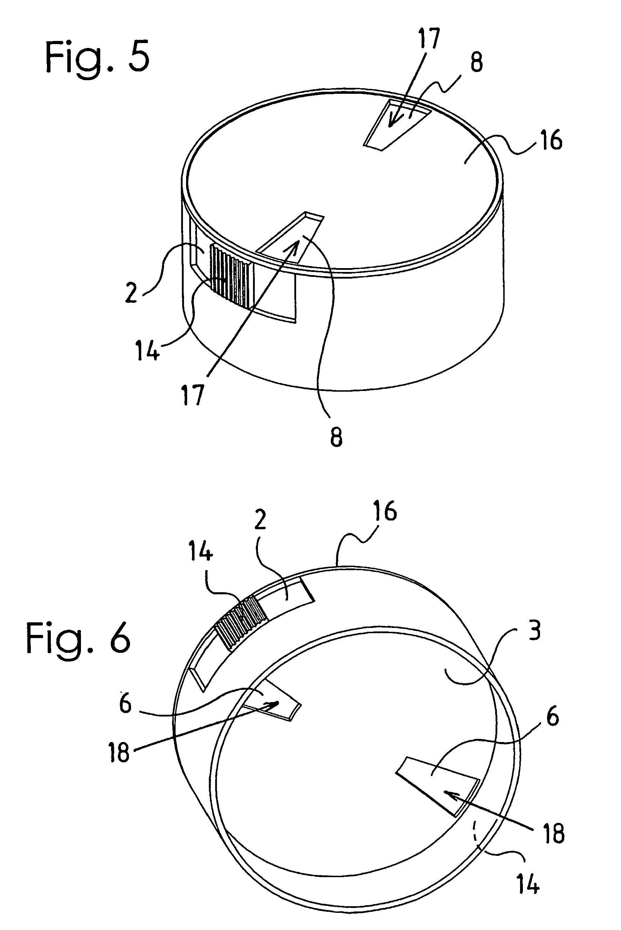

Betrachtet man den Dosierverschluss mit dem Dosierelement 2 in dieser Mittelstellung von oben, so stellt er sich wie in Figur 5 gezeigt dar und die Griffe 14 am Dosierelement 2 befinden entsprechend in der Mitte der Ausnehmungen in der Verschlussgehäusewand. Die Ausschüttöffnungen 17 sind hierbei von den oberen Abschlussflächen der Kammern 8 der Segmentkörper des Dosierelementes 2 verschlossen. Das in den Kammern 7 erfasste Schüttgut rinnt daher weder in das Flascheninnere zurück, noch kann es aus dem Dosierverschluss ausgeschüttet werden. Hierzu muss das Dosierelement 2 im Dosierverschluss noch weiter verschwenkt werden, bis es die Endposition erreicht.

Die Mittelstellung ist auch in Figur 6 dargestellt, wie das anhand der Griffe 14 am Dosierelement 2 erkennbar ist. Die Griffe 14 befinden sich entsprechend in der Mitte der Ausnehmungen in der Verschlussgehäusewand. Von unten sieht man hier auf den Zwischenboden 3, dessen Einschüttöffnungen 18 sind jetzt verdeckt von den unteren Abschlussflächen der Kammern 6. Die Kammern 7 sind jedoch mit Schüttgut gefüllt und jetzt auf ihrer Unterseite vom Zwischenboden 3 verschlossen und auf der oberen Seite vom Deckel 16 verschlossen. Die Kammern 7 enthalten daher eine ganz bestimmte Dosis, je nach Gestaltung ihrer Grösse.

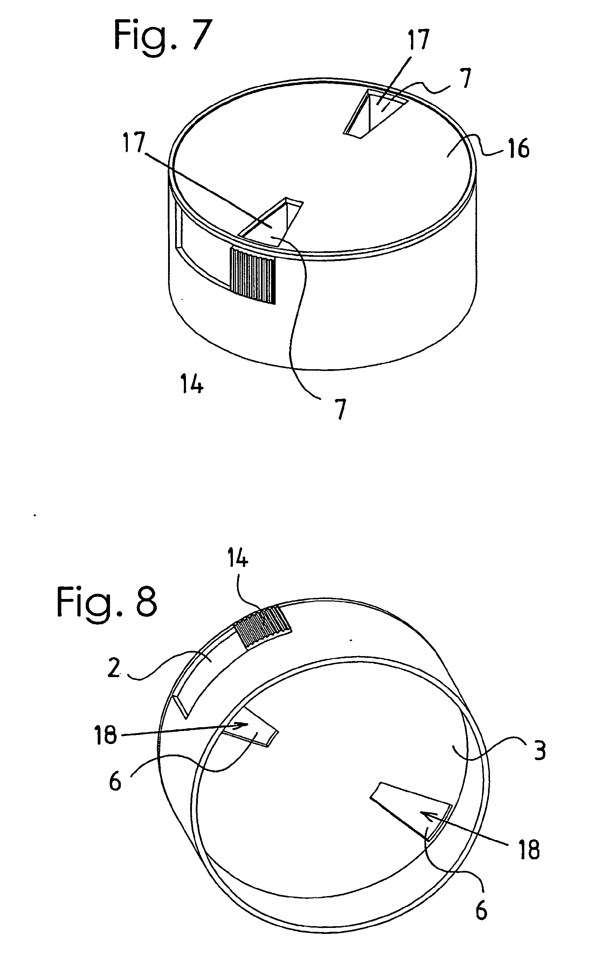

In Figur 7 ist der Dosierverschluss mit dem Dosierelement in der Endstellung von oben gesehen dargestellt. Die unten vom Zwischenboden 3 verschlossenen Kammern 7 liegen jetzt genau unterhalb der Ausschüttöffnungen 17 im Gehäusedeckel 16. Bei gestürzter Flasche wird der Inhalt der Kammern 7 durch die Ausschüttöffnungen 17 ausgeschüttet. Dabei handelt es sich um durch das Volumen der Kammern 7 genau definierte Portionen. Sollen mehrere derartige Portionen ausgeschüttet werden, so wird zu diesem Zweck die Flasche einfach mit der einen Hand in gestürzter Lage gehalten, während mit der anderen Hand das Dosierelement 2 im Dosierverschluss mehrmals von der Grundstellung in die Endstellung und hernach wieder zurück verschwenkt wird, wodurch jedes Mal die gleiche Portion Schüttgut in den Kammern 7 zwischengelagert und in der Endstellung ausgeschüttet wird.

In Figur 8 ist der Dosierverschluss mit dem Dosierelement 2 nochmals in dieser Endstellung in einer Ansicht von unten dargestellt. Man sieht, dass die Einschüttöffnungen 18 im Zwischenboden 3 verschlossen sind. Die unteren Abschlussflächen der Kammern 6 haben sich darüber geschoben. Die Griffe 14 befinden sich jetzt am Anschlag in ihrer Endstellung. Die federnde Rippe am Dosierelement ist in diesem Zustand maximal gekrümmt und entwickelt ein Rückstellmoment, sodass bei Loslassen der Griffe 14 das Dosierelement 2 sogleich in seine Grundstellung gemäss Darstellung in Figur 3 und 4 zurückgeschwenkt wird.

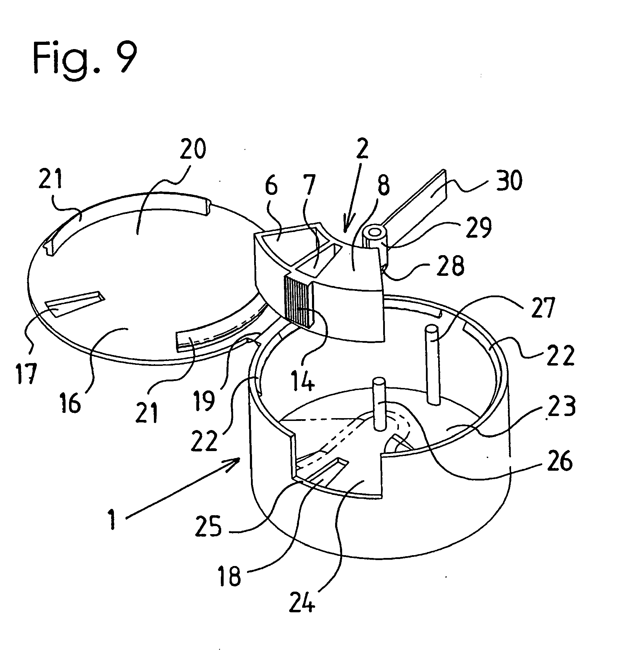

In Figur 9 ist eine zweite Variante des Dosierverschlusses mit einem alternativen Dosierelement in einer Ansicht vor dem Zusammenbau gezeigt. In dieser Ausführung besteht es ebenfalls grundsätzlich aus einem Dosierverschlussgehäuse 1 und einem darin einsetzbaren Dosierelement 2. Das Verschlussgehäuse weist ebenfalls einen über ein Filmschamier 19 angeformten Deckel 16 auf, an dessen Unterseite 20 zwei Schnappverschluss-Elemente 21 angeformt sind. Die Gegenstücke 22 zu diesen Schnappverschluss-Elementen 21 befinden sich am oberen Innenrand des Verschlussgehäuses 1. Der Deckel 16 weist hier eine einzige, kreissegmentförmige Ausschüttöffnung 17 auf. Der Gehäuseboden 23 des Dosierverschlusses hat hier die Form eines abgeplatteten Kegels, wobei die Abplattung 24 gegen die Ausnehmung 25 in der Gehäusewand hin beibehalten wird, sodass eine ebene erhöhte Fläche gebildet wird, welche bündig mit der Unterkante der Ausnehmung 25 ist. In dieser erhöhten Fläche 24 ist eine kreissegmentförmige Einschüttöffnung 18 ausgenommen. Im Zentrum des Bodens 23 ist ein Achsbolzen 26 angeformt, auf den das Dosierelement 2 aufgesteckt werden kann. An jener der Ausnehmung 25 gegenüberliegenden Seite ist am Boden 23 ein Anschlagzapfen 27 angeformt. Das zugehörige Dosierelement 2 ist oberhalb des Verschlussgehäuses 1 dargestellt, wobei die Achse, längs welcher es auf den Achsbolzen 26 aufgesteckt wird, strichliniert angedeutet ist. Es besteht aus einem kreissegmentförmigen Dosierkörper aus drei Kammern 6,7,8. Die Unterseite des Segmentkörpers läuft gegen das Drehzentrum hin in einen Boden 28 aus, der schliesslich eine senkrecht daraufstehende Büchse 29 mündet, die auf den Achsbolzen 26 stülpbar ist. Auf der anderen Seite der Büchse 29 ist eine Rippe 30 angeformt; welche als Blattfeder wirkt. Wenn das Dosierelement 2 auf den Achsbolzen 26 aufgesteckt ist, liegt die Rippe 30 in der Zeichnung rechts vom Anschlagzapfen 27. Wird der Deckel 16 verschlossen und befindet sich das Dosierelement 2 in der gezeigten Schwenklage, so ist die Rippe 30 nahezu entspannt, unterliegt jedoch einer geringen Vorspannung. Der Griff 14 befindet sich ganz links am Anschlag, und die Kammer 7 liegt oberhalb der Einschüttöffnung 18. Das ist die Grundstellung. Zum Ausschütten einer Portion wird die mit diesem Dosierverschluss ausgerüstete Flasche gestürzt. Dabei füllt sich die Kammer 7. Wenn dann das Dosierelement 2 veschwenkt wird, so kommt die gefüllte Kammer 7 in der Endstellung genau unterhalb der Ausschüttöffnung 17 im Verschlussdeckel 16 zu liegen und ihr Inhalt kann ausgeschüttet werden. Lässt man den Griff 14 des Dosierelementes 2 los, so wird es kraft der elastischen, nun gekrümmten Rippe 30 in die Ausgangslage zurückgeschwenkt.

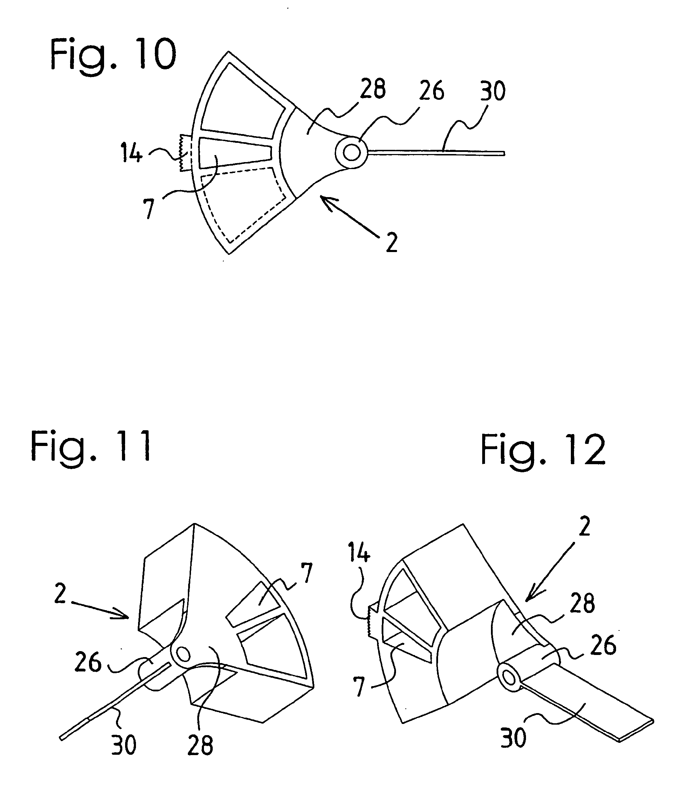

In den Figuren 10-12 sind drei Ansichten des Dosierelementes 2 dieses Dosierverschlusses nach Figur 9 aus verschiedenen Blickwinkeln gesehen dargestellt. In Figur 10 sieht man es in einem Grundriss. Deutlich erkennbar ist der vorstehende Griff 14 und die kreissegmentförmige Grundform des Elementes, das gegen die Schwenkachse hin in einen Boden 28 ausläuft, auf dem dann die Büchse 26 angeformt ist, und von der aus die elastische Rippe 30 radial absteht. Die Figur 11 zeigt das gleiche Dosierelement 2 in einer Ansicht von unten auf dessen Boden 28, und die Figur 12 zeigt es schräg von oben gesehen. Dieses Dosierelement 2 kann höchst einfach mit einen zweiteiligen Spritzwerkzeug ohne jegliche Schieber hergestellt werden, weil es keine Flächen aufweist, die hintergreifend sind. Das Gleiche trifft auch für das Dosierverschlussgehäuse 1 zu, das einfach mit geöffnetem Deckel gespritzt wird. Der Zusammenbau derartiger Dosierverschlüsse gestaltet sich höchst einfach, indem bloss zwei Stücke ineinandergelegt oder ineinandergesteckt zu werden brauchen und hernach ein Deckel entweder aufgesteckt oder zugeschwenkt und eingerastet zu werden braucht. Diese Montageschritte sind so einfach zu handhaben, dass sie mit wenig Aufwand auch maschinell von einem Automaten durchführbar sind, sodass letztlich der Dosierverschluss vollautomatisch von einer Maschine fixfertig herstellbar ist.

## Patentansprüche

1. Dosierverschluss aus gespritztem Kunststoff für schüttfähige Güter, bestehend aus einem Gehäuse (1) mit darin verschwenkbar gelagertem Dosierelement (2), wobei das Gehäuse (1) eine Kappe und einen daran einstückig über ein Filmscharnier angeformten Kappendeckel (16) bildet, der mittels Schnappverschlüssen (21,22) dichtend verschliessbar ist, und die Kappe einen Zwischenboden (3;23) aufweist, wobei zwischen dem Kappendeckel (16) und dem Zwischenboden (3;23) ein einstückiges Dosierelement (2) schwenkbar gelagert ist, ***dadurch gekennzeichnet,* dass** das Dosierelement (2) aus mindestens einem kreissegmentförmigen Körper besteht, welcher durch radiale Trennwände drei aneinander anliegende Teilsegmente (6,7,8) bildet, von denen das mittlere (7) eine Kammer bildet, die oben und unten offen ist, während von den aussen anliegenden (6,8) Teilsegmenten das eine (6) oben offen und unten geschlossen ist und das andere (8) oben geschlossen und unten offen ist, wobei die Kammer (7) je nach Schwenkstellung mit einer Öffnung (17) im Deckel (16) oder einer Öffnung (18) im Zwischenboden (3;23) kommuniziert.

2. Dosierverschluss aus gespritztem Kunststoff für schüttfähige Güter nach Anspruch 1, ***dadurch gekennzeichnet,* dass** die beiden äusseren Teilsegmente (6,8) mindestens eine doppelt so lange Peripherie wie die zwischen ihnen liegende zentrale Kammer (7) aufweisen und die periphere Aussenwand des kreissegmentförmigen Körpers ausserhalb der zentralen Kammer (7) eine Erhöhung zur Bildung eines Griffes (14) aufweist, welcher in eine an der Gehäusewand vorhandene Ausnehmung (13,14;25) ragt und darin zur Schwenkung des Dosierelementes (2) hin und her schiebbar ist und als Anschlag den Schwenkweg an beiden Enden begrenzt.

3. Dosierverschluss aus gespritztem Kunststoff für schüttfähige Güter nach einem der vorhergehenden Ansprüche, ***dadurch gekennzeichnet,* dass** das Dosierelement (2) zwei einander diametral gegenüberliegende kreissegmentförmige Körper (4,5) aufweist, deren äussere Umfangswand auf einer gemeinsamen virtuellen Ringwand liegt und von denen jeder drei nebeneinanderliegende Teilsegmente (6,7,8) bildet, wobei die beiden kreissegmentförmigen Körper (4,5) über eine Materialbrücke (9,10) fest miteinander verbunden sind.

4. Dosierverschluss aus gespritztem Kunststoff für schüttfähige Güter nach Anspruch 3, ***dadurch gekennzeichnet,* dass** die Materialbrücke (9,10) aus einem verlängerten Bodenstück (9) und einem im rechten Winkel dazu verlaufenden Steg (10) besteht, und dass quer zum Steg (10) eine Rippe (11) verläuft, die radial abstehende, bis zur Gehäusewand reichende elastische Federn bildet, deren Enden seitlich an Anschlagzapfen (12) anliegen, die am Zwischenboden (3) angeformt sind.

5. Dosierverschluss aus gespritztem Kunststoff für schüttfähige Güter nach einem der Ansprüche 1-2, ***dadurch gekennzeichnet,* dass** das Dosierelement (12) einen kreissegmentförmigen Körper aufweist, der durch radiale Trennwände drei aneinander anliegende Teilsegmente (6,7,8) bildet, wobei der kreissegmentförmige Körper im Drehzentrum eine Büchse (29) bildet, und jenseits der Büchse (29) in eine radiale Rippe (30) ausläuft, wobei das zugehörige Dosierverschlussgehäuse (1) an seinem Zwischenboden (23) einen zentralen Achsbolzen (26) zum Überstülpen der Büchse (29) und einen Anschlagzapfen (27) für die Rippe (30) aufweist.

6. Dosierverschluss aus gespritztem Kunststoff für schüttfähige Güter nach Anspruch 5, ***dadurch gekennzeichnet,* dass** der Zwischenboden (23) einen abgeplatteten Kegel bildet, wobei die Abplattung (24) gegen die Ausnehmung (25) hin bis zur Gehäusewand reicht und mit der Ausnehmung (25) bündig ist und eine kreissegmentförmige Einschüttöffnung (18) aufweist.

7. Dosierverschluss aus gespritztem Kunststoff für schüttfähige Güter nach einem der vorhergehenden Ansprüche, ***dadurch gekennzeichnet,* dass** längs der Innenseite des oberen Randes des Dosierverschlussgehäuses ein Schnappverschluss-Element (22) angeformt ist, dessen Gegenstück (21) längs des Randes der Unterseite (20) des Gehäusedeckels (16) verläuft, sodass der Deckel (16) unter Einschnappen des Schnappverschlusses dichtend verschliessbar ist.

8. Dosierverschluss aus gespritztem Kunststoff für schüttfähige Güter nach einem der vorhergehenden Ansprüche, ***dadurch gekennzeichnet,* dass** das Dosierelement (2) eine elastische Rippe (11;30) aufweist, die in der Grundstellung bei verschlossenem Dosierverschluss mit wenig Vorspannung an einem Anschlagzapfen (12;27) anliegt.

## Claims

1. Dosing closure, consisting of extruded plastic, for bulk substances, which can be poured out, comprising a housing (1) with dosing element (2) placed therein in a manner that it can be swivelled, wherein the housing (1) forms a cap with an one-piece cover (16), which is attached to it via an integral hinge, said cover closing tightly through snap-action closing (21, 22) and the cap having a false floor (3;23), where, between the cap cover (16) and the false floor (3;23), an one-piece dosing element (2) is placed in such a manner that it can be swivelled, **characterized in that** the dosing element (2) comprises at least one circular segment shaped body, which builds, through radial separating walls, three adjacent part segments (6,7,8), of which the middle one (7) builds a chamber, which is open at top and bottom, whereas of the outer, adjacent part segments (6,8), one (6) is open at top and closed at bottom and the other (8) is closed at top and open at bottom, wherein the chamber (7) communicates with an opening (17) in the cover (16) or an opening (18) in the false floor (3;23), depending on the position of swivel.

2. Dosing closure, consisting of extruded plastic, for bulk substances, which can be poured out, according to Claim 1, **characterized in that** both the outer part segments (6,8) have at least a periphery, which is double as long as that of the middle chamber (7), which lies between them, and the peripheral external wall of the circular segment shaped body outside the central chamber (7) has a raised portion for building a grip (14), which projects in a recess (13, 14;25) on the housing wall and can be moved back and forth there for swivelling the dosing element (2) and acts as a stopper for limiting this swivelling at two ends.

3. Dosing closure, consisting of extruded plastic, for bulk substances, which can be poured out, according to any of the preceding Claims, **characterized in that** the dosing element (2) has two circular segment shaped bodies (4,5), which are diametrically opposite to each other and whose external peripheral walls lie on a common, virtual ring wall and of whom, each builds three adjacent part segments (6,7,8), wherein the two circular segment shaped bodies (4,5) are firmly connected with each other via a material bridge (9,10).

4. Dosing closure, consisting of extruded plastic, for bulk substances, which can be poured out, according to Claim 3, **characterized in that** the material bridge (9,10) comprises an extended floor piece (9) and a bridge (10), which runs at right angle to it, and that a rib (11) runs across the bridge (10), sticking out radially and building a flexible spring, which reaches up to the housing wall and whose ends rest sidewise on the stopper pin (12), which is formed on the false floor (3).

5. Dosing closure, consisting of extruded plastic, for bulk substances, which can be poured out, according to any of the Claims 1-2, **characterized in that** the dosing element (2) has a circular segment shaped body, which builds, through radial separating walls, three adjacent part segments (6,7,8), wherein the circular segment shaped body forms a bushing (29) at the center of rotation and on the other side of the bushing (29), a rib (30) radially runs out, whereas the associated dosing closure housing (1) has on its false floor (23) a central axle pin (26) for placing the bushing (29) over it and a stopper pin (27) for the rib (30).

6. Dosing closure, consisting of extruded plastic, for bulk substances, which can be poured out, according to Claim 5, **characterized in that** the false floor (23) builds an oblate cone, wherein the oblate surface (24) runs towards the recess (25), reaching up to the housing wall and being flush with the recess (25), and it has a circular segment shaped pour-in opening (18).

7. Dosing closure, consisting of extruded plastic, for bulk substances, which can be poured out, according to any of the preceding Claims, **characterized in that** along the inner side of the upper edge of the dosing closure housing, a snap-action closing element (22) is formed, whose reverse piece (21) runs along the edge of the bottom side (20) of the housing cover (16) in such a manner that the cover (16) can be closed tightly when it is clicked in.

8. Dosing closure, consisting of extruded plastic, for bulk substances, which can be poured out, according to any of the preceding Claims, **characterized in that** the dosing element (2) has a flexible rib (11;30), which rests against a stopper pin (12;27) with small pre-tension in the initial position, when the dosing closure is closed.

## Revendications

1. Bouchon de dosage en matière plastique injectée pour des matières pouvant s'écouler en vrac, constitué d'un boîtier (1) comprenant un élément de dosage (2) monté dedans avec faculté de pivotement, dans lequel le boîtier (1) forme un capuchon et un couvercle de capuchon (16) ménagé en un seul tenant sur celui-ci par l'intermédiaire d'une charnière à film et pouvant être fermé de manière étanche au moyen de fermetures à déclic (21, 22), et dans lequel le capuchon présente un fond intermédiaire (3 ; 23), un élément de dosage (2) en un seul tenant étant monté avec faculté de pivotement entre le couvercle de capuchon (16) et le fond intermédiaire (3 ; 23), ***caractérisé en ce que*** l'élément de dosage (2) est constitué d'au moins un corps en forme de segment de cercle qui, au moyen de trois cloisons séparatrices radiales, forme trois segments partiels (6, 7, 8) placés l'un à côté de l'autre parmi lesquels le segment partiel central (7) forme une chambre qui est ouverte vers le haut et le bas, alors que, parmi les segments partiels placés à l'extérieur (6, 8), un segment (6) est ouvert vers le haut et fermé vers le bas et l'autre segment (8) est fermé vers le haut et ouvert vers le bas, et dans lequel la chambre (7) communique, selon la position de pivotement, avec une ouverture (17) dans le couvercle (16) ou avec une ouverture (18) dans le fond intermédiaire (3 ; 23).

2. Bouchon de dosage en matière plastique injectée pour des matières pouvant s'écouler en vrac selon la revendication 1, ***caractérisé en* ce *que*** les deux segments partiels extérieurs (6, 8) présentent au moins une périphérie dont la longueur est égale au double de celle de la chambre centrale (7) se trouvant entre eux *et **en ce que*** la cloison extérieure périphérique du corps en forme de segment de cercle de la chambre centrale (7) présente un rehaussement pour former une poignée (14) qui dépasse jusque dans un évidement (13, 14 ; 25) présent sur la paroi de boîtier et qui peut être poussée en va-et-vient dedans pour pivoter l'élément de dosage (2) et qui, en tant que butée, limite le trajet de pivotement sur deux extrémités.

3. Bouchon de dosage en matière plastique injectée pour des matières pouvant s'écouler en vrac selon l'une des revendications précédentes, ***caractérisé en* ce *que*** l'élément de dosage (2) présente deux corps en forme de segment de cercle (4, 5) opposés diamétralement l'un à l'autre dont la paroi circonférentielle extérieure est disposée sur une paroi annulaire virtuelle commune et parmi lesquels chacun forme trois segments partiels (6, 7, 8) placés l'un à côté de l'autre, les deux corps en forme de segment de cercle (4, 5) étant reliés fermement l'un à l'autre par un pont de matière (9, 10).

4. Bouchon de dosage en matière plastique injectée pour des matières pouvant s'écouler en vrac selon la revendication 3, ***caractérisé en ce que*** le pont de matière (9, 10) est constitué d'une pièce de fond prolongée (9) et d'une barrette (10) s'étendant en angle droit par rapport à celle-ci, *et **en ce qu'**une* nervure (11) s'étend perpendiculairement à la barrette (10), laquelle forme des ressorts élastiques dépassant radialement et s'étendant jusqu'à la paroi de boîtier, dont les extrémités viennent s'appliquer latéralement sur des tenons de butée (12) qui sont ménagés sur le fond intermédiaire (3).

5. Bouchon de dosage en matière plastique injectée pour des matières pouvant s'écouler en vrac selon l'une des revendications 1 à 2, ***caractérisé en ce que*** l'élément de dosage (12) présente un corps en forme de segment de cercle qui, au moyen de trois cloisons séparatrices radiales, forme trois segments partiels (6, 7, 8) placés l'un à côté de l'autre, dans lequel le corps en forme de segment de cercle forme une douille (29) dans le centre de rotation et dans lequel une nervure radiale (30) s'étend à l'écart de la douille (29), le boîtier associé du bouchon de dosage (1) présentant sur son fond intermédiaire (23) un goujon d'axe central (26) pour pénétrer dans la douille (29) et un tenon de butée (27) pour la nervure (30).

6. Bouchon de dosage en matière plastique injectée pour des matières pouvant s'écouler en vrac selon la revendication 5, ***caractérisé en ce que*** le fond intermédiaire (23) forme un cône aplati dans lequel l'aplatissement (24) s'étend contre l'évidement (25) jusqu'à la paroi de boîtier et est à fleur avec l'évidement (25), et présente une ouverture de remplissage en forme de segment de cercle (18).

7. Bouchon de dosage en matière plastique injectée pour des matières pouvant s'écouler en vrac selon l'une des revendications précédentes, ***caractérisé en ce qu'**un* élément de fermeture à déclic (22) est ménagé le long du côté intérieur du bord supérieur du boîtier du bouchon de dosage, dont le pendant (21) s'étend le long du bord de la face inférieure (20) du couvercle de boîtier (16), de sorte que le couvercle (16) peut être fermé avec étanchéité par l'encliquetage de la fermeture à déclic.

8. Bouchon de dosage en matière plastique injectée pour des matières pouvant s'écouler en vrac selon l'une des revendications précédentes, ***caractérisé en ce que*** l'élément de dosage (2) présente une nervure élastique (11 ; 30) qui, dans la position de base alors que le bouchon de dosage est fermé, vient s'appliquer sur un tenon de butée (12 ; 27) avec une faible pré-tension.
